# EUROPÄISCHE PATENTSCHRIFT

(11) **EP 2 190 625 B1**
(45) Veröffentlichungstag und Bekanntmachung des Hinweises auf die Patenterteilung: **25.05.2011**
(21) Anmeldenummer: 08785391.7
(22) Anmeldetag: 07.08.2008
(51) Int. Cl.: B23Q 1/62, B23Q 5/40, B23Q 39/02, B23Q 3/157

(54) **WERKZEUGMASCHINE MIT ZWEI SCHLITTEN UND EINEM WERKZEUG-MAGAZIN**
MACHINE TOOL HAVING TWO CARRIAGES AND A TOOL MAGAZINE
MACHINE-OUTIL DOTÉE DE DEUX CHARIOTS ET D'UN MAGASIN À OUTILS

(30) Priorität: 14.09.2007 DE 102007043977
(43) Veröffentlichungstag der Anmeldung: 02.06.2010
(73) Patentinhaber: Licon mt GmbH & Co. KG, 88471 Laupheim (DE)
(72) Erfinder: BENZ, Winfried, 89189 Neenstetten (DE); NIETHAMMER, Stefan, 88433 Schemmerhofen (DE); SCHRÖTER, Bernd, 88437 Sulmingen (DE); STENGELE, Gerald, 71636 Ludwigsburg (DE); WEINBUCH, Thomas, 88471 Laupheim (DE)
(74) Vertreter: Rau, Manfred
(86) Internationale Anmeldenummer: PCT/EP2008/006475
(87) Internationale Veröffentlichungsnummer: WO 2009/036843

(56) Entgegenhaltungen:
- EP-A- 0 307 830
- EP-A- 0 985 489
- US-A- 5 871 426
- US-A- 6 066 078

## Beschreibung

Die Erfindung betrifft eine Werkzeugmaschine.

Aus der US 5,871,426 A sind Werkzeugmaschinen bekannt, und zwar sogenannte Fahr-Ständer-Maschinen, die ein Maschinenbett aufweisen, auf dem ein x-Schlitten auf x-Führungsschienen verfahrbar angeordnet ist. Auf dem x-Schlitten sind in z-Richtung verlaufende z-Führungsschienen angeordnet, auf denen ein z-Schlitten verfahrbar geführt ist. Der x-Schlitten und der z-Schlitten bilden also einen Kreuzschlitten. Auf dem z-Schlitten ist ein Ständer angeordnet, an dessen einem Arbeitsraum zugewandter Frontseite an vertikalen y-Führungs-Schienen ein y-Schlitten vertikal verschiebbar angeordnet ist. Am y-Schlitten ist eine sich z-Richtung erstreckende, drehantreibbare, in z-Richtung gegenüber dem y-Schlitten unverschiebbare Werkzeug-Spindel angebracht, die an ihrem dem Arbeitsraum zugewandten Ende eine Werkzeug-Aufnahme trägt. Vor der Spindel befindet sich im Arbeitsraum eine Werkstück-Aufnahme. Die Bewegungen der Werkzeug-Spindel und damit des in ihrer Werkzeug-Aufnahme gehaltenen Werkzeugs in den horizontalen x- und z-Richtungen erfolgt durch entsprechende Verfahrbewegungen des Kreuz-Schlittens mit dem Ständer. Die vertikalen Verfahrbewegungen erfolgen mittels des y-Schlittens, der von einem seitlich angebrachten y-Motor antreibbar ist. Bei dieser bekannten Maschine befindet sich oberhalb des Ständers eine Brücke mit einem Werkzeug-Magazin und einem Werkzeug-Wechsler.

Aus der EP 0 985 489 A ist eine Werkzeugmaschine bekannt, bei der auf einem Maschinen-Gestell auf x-Führungs-Schienen zwei als Ständer ausgebildete x-Schlitten verschiebbar angeordnet sind. An den einander zugewandten Seiten der x-Schlitten sind y-Schlitten verschiebbar geführt, an denen wiederum in z-Richtung verschiebbare Pinolen angebracht sind, die an ihrer einem Arbeitsraum zugewandten Seite mit Werkzeugaufnahmen zur Bearbeitung nur eines im Arbeitsraum auf einem Werkstück-Träger angebrachten Werkstücks dienen. Die x-Schlitten sind mittels x-Spindel-Spindelmutter-Trieben antreibbar. Entsprechendes gilt für die y-Schlitten. Werkzeug-Wechsel-Vorrichtungen sind nicht vorgesehen. Auch hierbei treten Genauigkeitsprobleme bei der Bearbeitung auf und zwar aufgrund von Wärmedehnungen innerhalb der Maschine.

Aus der US 6,066,078 A ist es bekannt, auf einem Maschinenbett im Abstand voneinander zwei Stützen anzuordnen, die an ihrer Oberseite mittels eines Querbalkens verbunden sind. An den einander zugewandten Seiten der Stützen sind zwei y-Schlitten vertikal verfahrbar. Die Antriebe dieser y-Schlitten befinden sich auf der Oberseite des Querbalkens. An den y-Schlitten sind Pinolen angebracht, die in z-Richtung verschiebbar sind. Vor dem durch die Stützen und den Querbalken gebildeten Rahmen ist ein Werkstück-Träger in x-Richtung verfahrbar auf dem Maschinengestell angeordnet. An der Vorderseite des Rahmens befindet sich weiterhin ein Werkzeug-Magazin, aus dem die an den Pinolen ausgebildeten Werkzeugaufnahmen selbsttätig ihre Werkzeuge holen können. Mit dieser bekannten Ausgestaltung kann jeweils zur gleichen Zeit nur ein Werkstück bearbeitet werden. Diese Werkstück-Maschine ist also nicht vielseitig. Die Ausgestaltung mit zwei Stützen, die durch einen Querbalken miteinander verbunden sind, führt zu Genauigkeitsproblemen bei der Bearbeitung von Werkstücken aufgrund von Wärmedehnungen innerhalb der Maschine.

Aus der EP 0 307 830 A ist es bekannt, an eine Werkzeugmaschine einen Antriebsmotor mit einem Riementrieb vorzusehen.

Aus der EP 1 285 721 B1 ist eine Werkzeugmaschine bekannt, die auf einem Maschinenbett ein Paar von in x-Richtung verlaufenden x-Führungs-Schienen aufweist, auf denen als Ständer ausgebildete x-Schlitten verschiebbar angeordnet sind. Jeder x-Schlitten weist an seiner vorderen, einem Arbeitsraum zugewandten Seite einen vertikal verschiebbaren y-Schlitten auf, an dem wiederum ein eine Werkzeug-Spindel tragender z-Schlitten angeordnet ist, sodass die Werkzeug-Spindel mit einer vorderen Werkzeug-Aufnahme in z-Richtung verschiebbar ist. Oberhalb der Oberseiten der als Ständer ausgebildeten x-Schlitten ist eine Brücke angeordnet, auf der ein Werkzeugmagazin angeordnet ist. Die x-Schlitten sind ständig unter der Brücke angeordnet. Die y-Schlitten tragen an ihrer Vorderseite Werkzeug-Wechsler, die zum Werkzeugwechsel mit den y-Schlitten und den z-Schlitten nach oben verfahren werden. Da jeder z-Schlitten pinolenartig ausgebildet ist, ist die bekannte Werkzeug-Maschine in sich nicht steif. Die eingangs geschilderten Probleme können mit dieser Werkzeugmaschine nicht behoben werden.

Der Erfindung liegt daher die Aufgabe zugrunde, eine Werkzeugmaschine der eingangs erläuterten Art zu schaffen, die bei hoher Leistungsfähigkeit hohe Flexibilität und hohe Genauigkeit bei einfachem Aufbau aufweist.

Diese Aufgabe wird durch die Merkmale des Anspruches 1 gelöst.

Dadurch, dass die x-Antriebe der beiden Ständer voneinander unabhängig sind, kann eine Kompensation von temperaturbedingten Relativbewegungen der Ständer zueinander in einfacher Weise erfolgen. Weiterhin kann auch an jedem Ständer eine Kompensation von unterschiedlichen Ausdehnungen in z- und y-Richtung durchgeführt werden. Aufgrund der Anordnung der Werkzeug-Magazine unmittelbar oberhalb der Oberseite jedes Ständers und durch die im Zusammenhang hiermit stehende Verlegung des y-Antriebs-Motors unterhalb der Oberseite des Ständers bleibt der Arbeitsraum von beiden Seiten her frei zugänglich. Mit den beiden Werkzeug-Spindeln können grundsätzlich parallel gleiche Arbeitsvorgänge ausgeübt werden. Theoretisch können aber auch unterschiedliche Arbeitsvorgänge ausgeübt werden. Dadurch, dass die Werkzeug-Spindel bis in die Nähe der Oberseite des Ständers verfahren werden kann, ist ein einfacher Werkzeugwechsel mittels eines Schwenk-Wechslers möglich.

Weitere Vorteile, Merkmale und Einzelheiten der Erfindung ergeben sich aus der nachfolgenden Beschreibung eines Ausführungsbeispiels der Erfindung anhand der Zeichnung. Es zeigt:

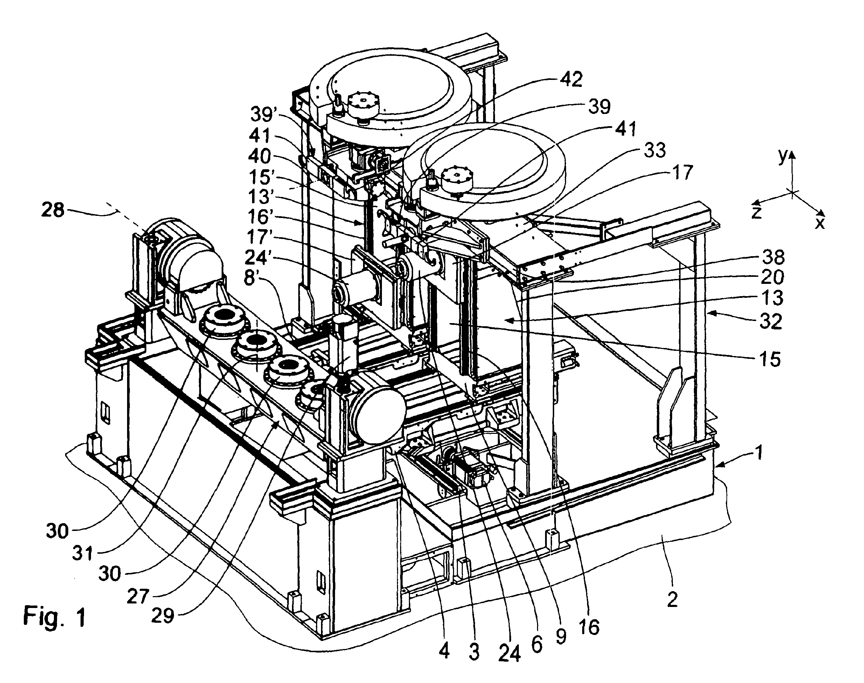

- Fig. 1: eine perspektivische Darstellung einer Werkzeugmaschine nach der Erfindung,

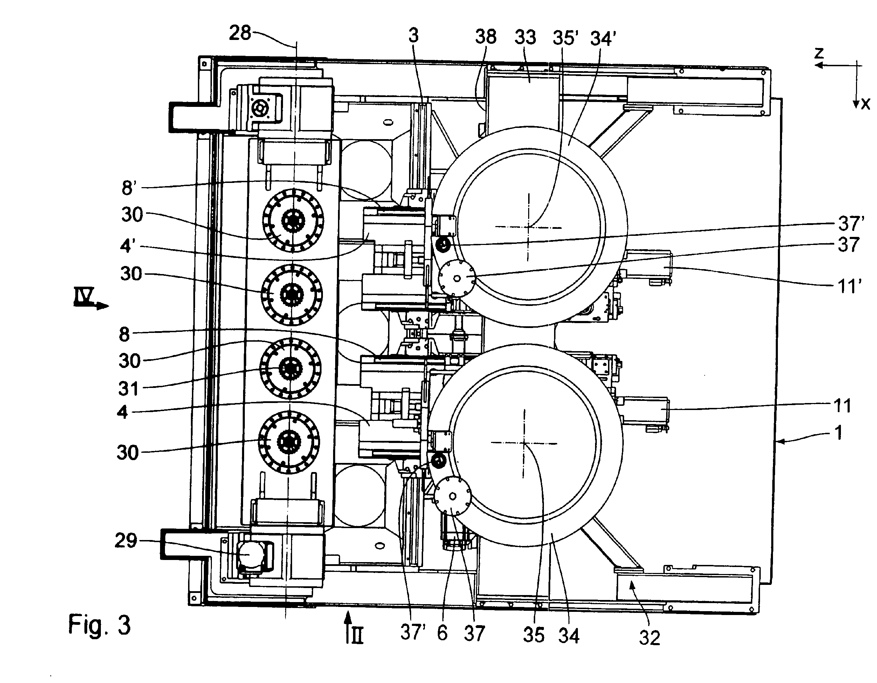

- Fig. 2: eine Seitenansicht der Werkzeugmaschine entsprechend dem Sichtpfeil II in Fig. 3 und 4,
- Fig. 3: eine Draufsicht auf die Werkzeugmaschine gemäß dem Sicht- pfeil III in Fig. 2 und 4,
- Fig. 4: eine Frontansicht der Werkzeugmaschine entsprechend dem Sichtpfeil IV in Fig. 2 und 3,
- Fig. 5: eine Draufsicht auf das Maschinenbett der Werkzeugmaschi- ne,

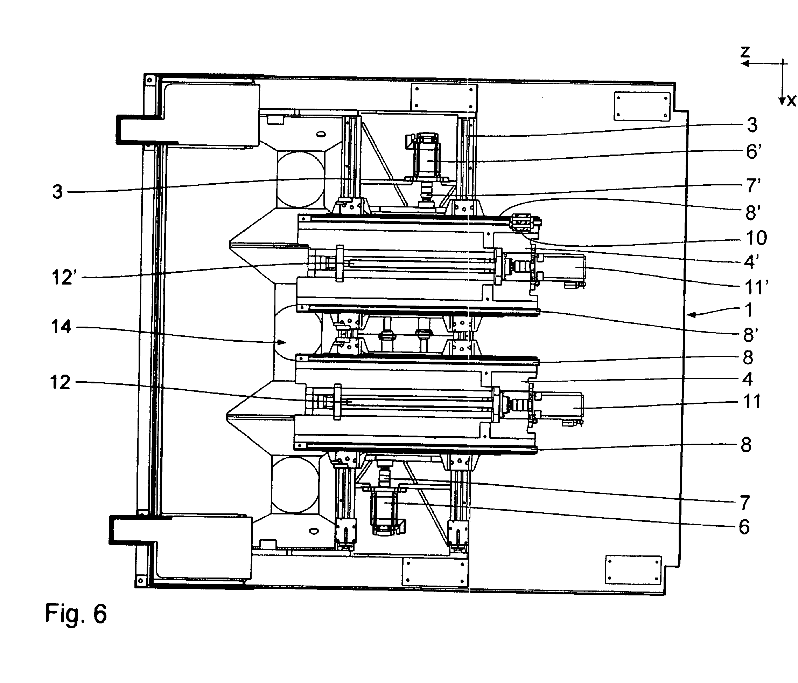

- Fig. 6: eine Draufsicht auf das Maschinenbett der Werkzeugmaschi- ne mit aufgesetztem x-Schlitten,

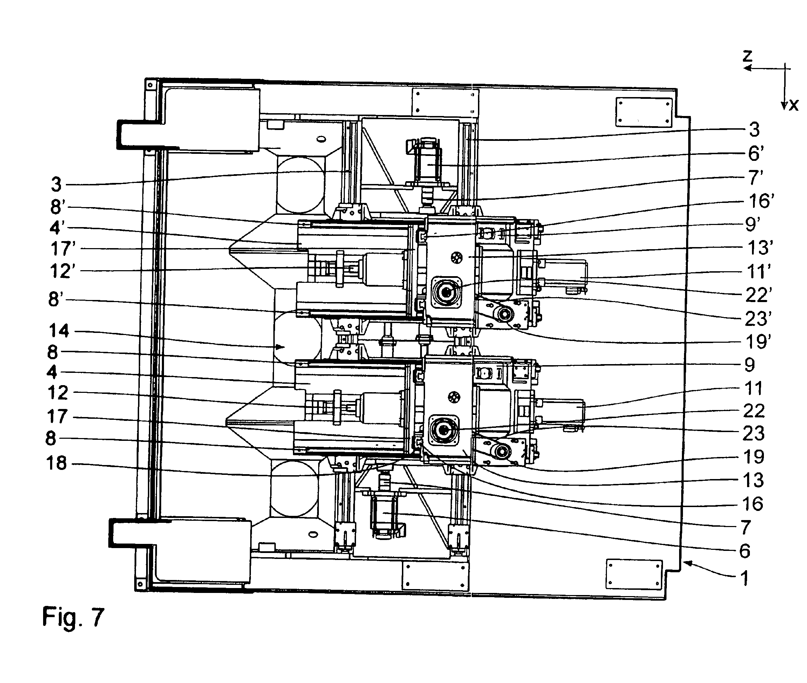

- Fig. 7: eine Draufsicht auf die Werkzeugmaschine ohne Brücke mit Werkzeug-Magazinen und Werkzeug-Wechslern und
- Fig. 8: eine perspektivische Teilansicht eines Ständers der Werk- zeugmaschine.

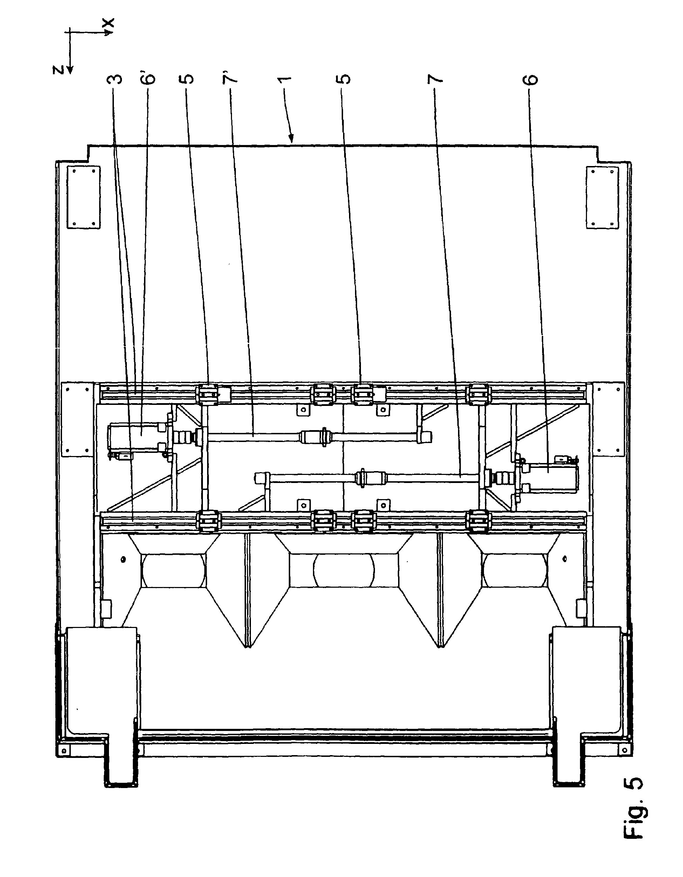

Wie die Zeichnung erkennen lässt, weist die dort dargestellte Werkzeugmaschine, bei der es sich um eine Fräsmaschine handelt, ein Maschinenbett 1 auf, das auf dem Boden 2 abgestützt ist. Auf dem Maschinenbett 1 ist ein Paar von parallel zueinander angeordneten x-Führungs-Schienen 3 angebracht, auf dem zwei voneinander unabhängige, also nicht miteinander verbundene x-Schlitten 4, 4' in einer horizontalen x-Richtung unabhängig voneinander verschiebbar angeordnet sind. Jeder x-Schlitten 4, 4' ist hierzu über vier Führungs-Schuhe 5 auf den x-Führungs-Schienen 3 abgestützt. Jeder Schlitten wird von einem x-Antriebs-Motor 6 bzw. 6' über einen x-Spindel-Spindelmutter-Trieb 7, 7' angetrieben. Die x-Antriebs-Motoren 6, 6' sind einander gegenüberliegend am Maschinenbett 1 angebracht, wie Fig. 5 entnehmbar ist. Auf jedem x-Schlitten 4, 4' ist ein Paar von z-Führungs-Schienen 8, 8' angebracht, auf denen jeweils ein z-Schlitten 9, 9' mittels Führungs-Schuhen 10 abgestützt und in einer horizontalen z-Richtung verschiebbar angeordnet ist. Die z-Richtung verläuft senkrecht zur x-Richtung. Jeder z-Schlitten 9, 9' ist mittels eines z-Antriebs-Motors 11 bzw. 11' ebenfalls über einen z-Spindel-Spindelmutter-Trieb 12, 12' in z-Richtung antreibbar. Die x-Schlitten 4, 4' und die z-Schlitten 9, 9' bilden jeweils einen Kreuzschlitten.

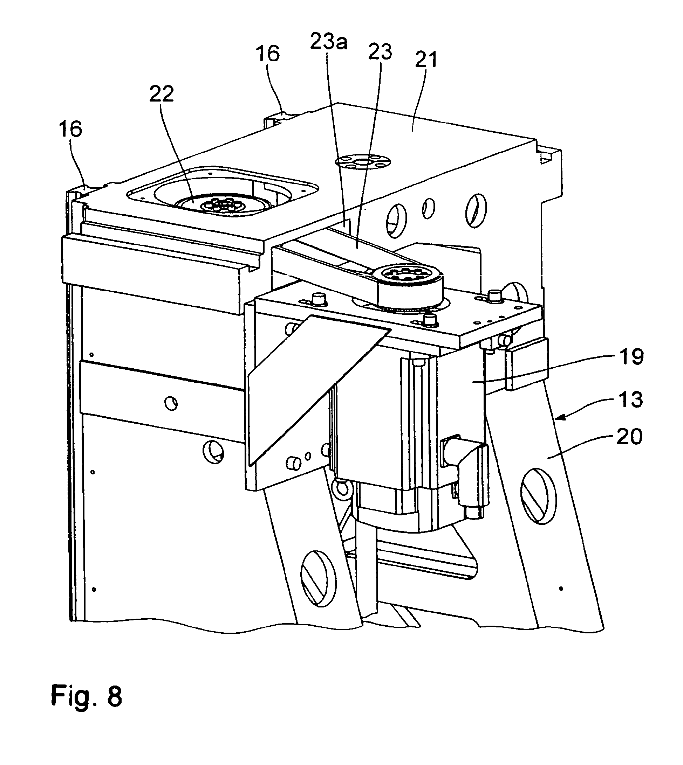

Mit dem z-Schlitten 9, 9' ist jeweils ein Ständer 13, 13' verbunden. An seiner jeweils einem gemeinsamen Arbeitsraum 14 zugewandten Frontseite 15, 15' jedes Ständers 13, 13' ist ein Paar von zueinander parallelen y-Führungs-Schienen 16, 16' angebracht, auf dem jeweils ein y-Schlitten 17, 17' mittels Führungs-Schuhen 18 in einer zur x- und zur z-Richtung senkrechten, vertikalen y-Richtung verschiebbar geführt ist. Der Antrieb erfolgt jeweils mittels eines y-Antriebs-Motors 19, 19', der an der dem Arbeitsraum 14 und der jeweiligen Frontseite 15, 15' abgewandten Rückseite 20, 20' des jeweiligen Ständers 13, 13' angeordnet ist, und zwar unterhalb der jeweiligen Oberseite 21, 21' des Ständers 13, 13'. Der Antrieb des auch hier jeweils vorhandenen y-Spindel-Spindelmutter-Triebs 22, 22' erfolgt nicht direkt vom jeweiligen y-Antriebs-Motor 19, 19', wie bei den x-Schlitten 4, 4' und den z-Schlitten 9, 9', sondern über einen Riementrieb 23, 23', so dass die y-Schlitten 17, 17' im Bereich ihrer Oberseite 21, 21' frei von Hindernissen sind. Wie Fig. 8 entnehmbar ist, durchsetzt der Riementrieb 23 eine Öffnung 23a in der Rückseite 20 des Ständers 13, die zur Oberseite 21 des Ständers 13 hin verschlossen ist, wodurch die Stabilität des Ständers 13 nicht beeinträchtigt wird.

Jeder y-Schlitten 17, 17' trägt in seinem oberen Bereich eine Werkzeug-Spindel 24, 24', die von einem Motor 25, 25' drehantreibbar ist. An ihrem dem Arbeitsraum 14 zugewandten vorderen Ende ist jede Werkzeug-Spindel 24, 24' mit einer Werkzeug-Aufnahme 26, 26' versehen. Die Werkzeug-Spindeln 24, 24' erstrecken sich in z-Richtung und sind gegenüber dem jeweils sie tragenden y-Schlitten 17, 17' in z-Richtung unverschiebbar.

Im Arbeitsraum 14, also in z-Richtung vor den Ständern 13, 13' und den Werkzeug-Spindeln 24, 24', ist ein Werkstück-Träger 27 in Form einer Brücke vorgesehen, die um eine zur x-Richtung parallele A-Achse 28 mittels eines Schwenk-Motors 29 schwenkbar ausgebildet ist. Auf dem Werkstück-Träger 27 sind mehrere, im vorliegenden Fall vier, Werkstück-Aufnahmen 30 angeordnet, die um eine senkrecht zur A-Achse 28 verlaufende B-Achse 31 schwenkbar ausgebildet sein können.

Auf dem Maschinenbett 1 ist ein Trag-Gestell 32 angebracht, das unmittelbar oberhalb der Oberseiten 21, 21' der Ständer 13, 13' eine Brücke 33 aufweist, auf der zwei Werkzeug-Magazine 34, 34' angeordnet sind, die als Scheiben-Magazine ausgebildet sind und um jeweils eine vertikale, also zur y-Richtung parallele Achse 35, 35' mittels je eines Motors 36 drehantreibbar sind. Die Werkzeug-Magazine 34, 34' können in der Nähe ihres Umfangs eine größere Zahl von Werkzeugen 37, 37' aufnehmen, von denen jeweils nur zwei dargestellt sind.

An der dem Arbeitsraum 14 zugewandten Stirnseite 38 der Brücke 33 ist vor jedem Werkzeug-Magazin 34, 34' ein Werkzeug-Wechsler 39, 39' angeordnet. Diese Werkzeug-Wechsler sind allgemein bekannt. Sie weisen einen um eine horizontale in z-Richtung verlaufende Schwenk-Achse 40 schwenkbaren Wechsel-Arm 41 auf, der an seinen beiden Enden jeweils einen Werkzeug-Greifer 42 trägt. Unterhalb des jeweils scheibenförmigen Werkzeug-Magazins 34 bzw. 34' befindet sich eine Auflage 43, in die ein Werkzeug 37 bzw. 37' aus einem Werkzeug-Magazin 34 bzw. 34' gelegt werden kann, wobei es aus der vertikalen Position im Werkzeug-Magazin 34, 34' in eine horizontale Position überführt wird. Zum Rücktransport aus dieser Auflage 43 in das Werkzeug-Magazin 34 bzw. 34' wird das Werkzeug 37 bzw. 37' wieder hochgeschwenkt. Derartige Werkzeug-Magazine 34, 34' und die Werkzeug-Wechsler 39, 39' sind handelsüblich und allgemein bekannt, beispielsweise aus dem Prospekt "Kurvengesteuertes Werkzeugwechselsystem" der MIKSCH GMBH, 73037 Göppingen/Deutschland, Veröffentlichungsnummer M288DD/0605. Hieraus ist auch eine Einrichtung zum erwähnten Überführen eines Werkzeugs 37, 37' aus dem Werkzeug-Magazin 34, 34' in die Auflage 43 und umgekehrt bekannt. Der Wechsel-Arm 41 ist in Richtung der Schwenk-Achse 40 verschiebbar.

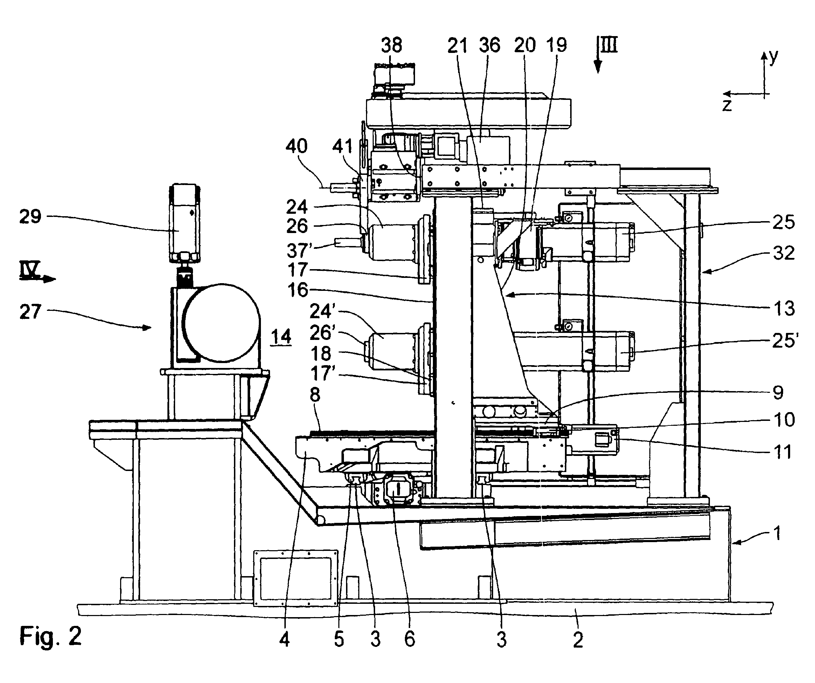

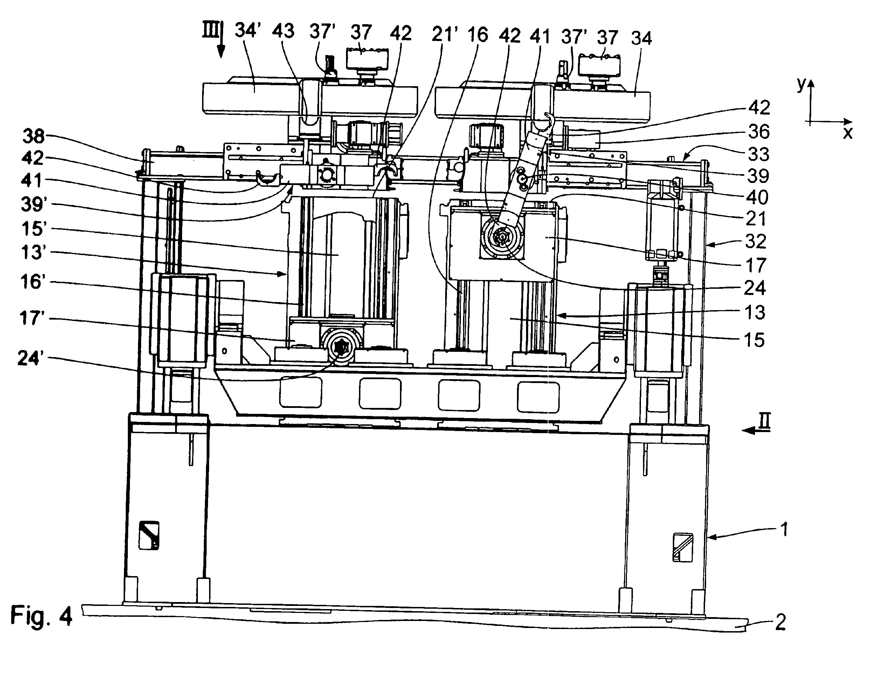

Der Werkzeug-Wechsler 39 bzw. 39' befindet sich - wenn kein Werkzeugwechsel stattfindet - in einer in Fig. 4 links dargestellten horizontalen Ruhelage vor der Stirnseite 38 der Brücke 33. Zum Werkzeugwechsel fährt der jeweilige Ständer 13 bzw. 13' in die in Fig. 2 dargestellte rückwärtige Lage, in der sich die Werkzeug-Aufnahme 26 bzw. 26' der jeweiligen Werkzeug-Spindel 24 bzw. 24' unterhalb des jeweiligen Werkzeug-Wechslers 39 bzw. 39' befindet. Die Werkzeug-Spindel 24 bzw. 24', in der ein auszuwechselndes Werkzeug sich befindet, wird durch entsprechendes Verfahren des jeweiligen y-Schlittens 17 bzw. 17' in ihre oberste Lage unmittelbar benachbart zur Oberseite 21 bzw. 21' des jeweiligen Ständers 13 bzw. 13' verbracht, so dass die Werkzeug-Greifer 42 des Wechsel-Arms 41 jeweils vor die Werkzeug-Aufnahme 26 bzw. 26' gebracht werden können, und nur zwar durch Verschwenken um die Schwenk-Achse 40. Der Wechsel-Arm 41 wird dann in die in Fig. 4 rechte Position geschwenkt, in der ein in der Werkzeug-Aufnahme 26 bzw. 26' befindliches Werkzeug mittels des einen Werkzeug-Greifers 42 ergreift. Mit dem anderen Werkzeug-Greifer 42 ergreift er ein vor dem jeweiligen Werkzeug-Magazin 34 bzw. 34' in einer Auflage 43 befindliches horizontal liegendes Werkzeug 37 bzw. 37'. Anschließend wird der Wechsel-Arm 41 mit den beiden Werkzeugen 37 bzw. 37' von der Brücke 33 weg, also in z-Richtung, zum Werkstück-Träger 27 hin verschoben, wodurch das in der Werkzeug-Aufnahme 26 bzw. 26' befindliche Werkzeug aus diesem herausgezogen wird. Danach wird der Wechsel-Arm um 180° um seine Schwenk-Achse 40 gedreht und wieder in z-Richtung zurückverfahren, wodurch ein neues Werkzeug 37 bzw. 37' in die Werkzeug-Aufnahme 26 bzw. 26' eingeschoben und das nicht mehr benötigte Werkzeug 37 bzw. 37' in das zugehörige Magazin 34 bzw. 34' geschoben wird. Anschließend wird der Wechsel-Arm 41 wieder in seine bereits erwähnte Ruhelage verschwenkt.

Anstelle der geschilderten als Scheiben-Magazine ausgestalteten Werkzeug-Magazine kann für beide Ständer 13, 13' auch ein gemeinsames Magazin, beispielsweise ein Ketten-Magazin, als Werkzeug-Magazin vorgesehen sein, das auf dem Trag-Gestell 32 angeordnet wäre.

## Patentansprüche

1. Werkzeugmaschine,
- mit einem Maschinenbett (1),
- mit einem Paar von auf dem Maschinenbett (1) angeordneten, in einer horizontalen x-Richtung verlaufenden x-Führungs-Schienen (3),
- mit zwei auf den x-Führungs-Schienen (3) in x-Richtung mittels x-Antriebs-Motoren (6, 6') unabhängig voneinander verschiebbar angeordneten x-Schlitten (4, 4'),
- mit je einem auf jedem x-Schlitten (4, 4') angeordneten, in einer senkrecht zur horizontalen x-Richtung verlaufenden horizontalen z-Richtung verschiebbaren z-Schlitten (9, 9'),
- mit je einem auf jedem z-Schlitten (9, 9') angeordneten Ständer (13, 13') mit einer Oberseite (21, 21') und einer Frontseite (15, 15'),
- mit je einem an jeder Frontseite (15, 15') angeordneten, in einer senkrecht zur x-Richtung und zur z-Richtung verlaufenden vertikalen y-Richtung bis in die Nähe der Oberseite (21, 21') verschiebbar angeordneten y-Schlitten (17, 17'),
-- der jeweils mittels eines y-Spindel-Spindelmutter-Triebs (22, 22') verschiebbar ist, wobei der y-Spindel-Spindelmutter-Trieb (22, 22') mittels eines y-Antriebs-Motors (19, 19') drehantreibbar ist, der an der der Frontseite (15, 15') abgewandten Rückseite (20, 20') des Ständers (13, 13') unterhalb von dessen Oberseite (21, 21') angeordnet ist,
- mit je einer an jedem y-Schlitten (17, 17') angeordneten Werkzeug-Spindel (24, 24'),
die
-- drehantreibbar ist,
-- sich in z-Richtung erstreckt,
-- gegenüber dem y-Schlitten (17, 17') in z-Richtung unverschiebbar ist und
-- an einem vor der Frontseite (15, 15') befindlichen Ende eine Werkzeug-Aufnahme (26, 26') aufweist
- mit einem vor den Frontseiten (15, 15') angeordneten Arbeitsraum (14),
- mit einem im Arbeitsraum (14) auf dem Maschinenbett (1) angeordneten Werkstück-Träger (27),
- mit mindestens je einer auf dem Werkstück-Träger (27) angeordneten, jedem Ständer (13, 13') zugeordneten Werkstück-Aufnahme (30),
- mit einer unmittelbar über der Oberseite (21, 21') jedes Ständers (13, 13') vorgesehenen Brücke (33),
- mit mindestens einem unmittelbar oberhalb der Oberseiten (21, 21') der Ständer (13, 13') auf der Brücke (33) angeordneten Werkzeug-Magazin (34, 34') und
- mit je einem an der Brücke (33) vorgesehenen Werkzeug-Wechsler (39, 39') zur Übergabe von Werkzeugen (37, 37') vom Werkzeug-Magazin (34, 34') zur Werkzeug-Aufnahme (26, 26') und umgekehrt, wobei zum Werkzeug-Wechsel der jeweilige Ständer (13, 13') derart unter das Werkzeug-Magazin (34, 34') verfahrbar ist, dass die jeweilige Werkzeug-Aufnahme (26, 26') sich unterhalb des jeweiligen Werkzeug-Wechslers (39, 39') befindet.

2. Werkzeugmaschine nach Anspruch 1, **dadurch gekennzeichnet, dass** der Werkzeug-Wechsler (39, 39') einen um eine in z-Richtung verlaufende Schwenk-Achse (40) schwenkbaren Wechsel-Arm (41) aufweist, der an seinen beiden Enden mit je einem Werkzeug-Greifer (42) versehen ist und
dass der y-Schlitten (17, 17') so weit in Richtung zur Oberseite (21, 21') des Ständers (13, 13') verfahrbar ist, dass ein Werkzeug-Greifer (42) vor eine Werkzeug-Aufnahme (26, 26') schwenkbar ist.

3. Werkzeugmaschine nach Anspruch 1, **dadurch gekennzeichnet,**
**dass** je ein Werkzeug-Magazin (34, 34') vorgesehen ist, das unmittelbar oberhalb der Oberseite (21, 21') jedes Ständers (13, 13') angeordnet ist.

4. Werkzeugmaschine nach Anspruch 1, **dadurch gekennzeichnet,**
**dass** der y-Antriebs-Motor (19, 19') mit dem y-Spindel-Spindelmutter-Trieb (22, 22') mittels eines Riementriebs (23, 23') gekoppelt ist.

5. Werkzeugmaschine nach Anspruch 4, **dadurch gekennzeichnet,**
**dass** der Riementrieb (23, 23') eine Öffnung (23a) im Ständer (13, 13') durchsetzt.

6. Werkzeugmaschine nach Anspruch 5, **dadurch gekennzeichnet,**
**dass** die Öffnung (23a) in einer Rückseite (20) des Ständers (13) ausgebildet ist.

7. Werkzeugmaschine nach Anspruch 1, **dadurch gekennzeichnet,**
**dass** der Werkstück-Träger (27) in Form einer Brücke ausgebildet ist, die um eine zur x-Richtung parallele A-Achse (28) mittels eines Schwenk-Motors (29) schwenkbar ausgebildet ist.

## Claims

1. Machine tool,
- with a machine bed (1),
- with a pair of x-guide rails (3) arranged on the machine bed (1) and extending in a horizontal x-direction,
- with two x-slides (4, 4') displaceably arranged in the x-direction on the x-guide slides (3),
- with a respective z-slide (9, 9') arranged on each x-slide (4, 4') and displaceable in a horizontal z-direction extending perpendicular to the horizontal x-direction,
- with a respective stand (13, 13') arranged on each z-slide (9, 9') with an upper side (21, 21') and a front side (15, 15'),
- with a respective y-slide (17, 17') arranged on each front side (15, 15') and displaceably arranged in a vertical y-direction extending perpendicular to the x-direction and to the z-direction up to close to the upper side (21, 21'),
-- the respective y-slide (17, 17') being displaceable by means of a y-spindle spindle nut drive (22, 22'), wherein the y-spindle-spindle nut drive (22, 22') is rotationally drivable by means of a y-drive motor (19, 19'), which is arranged on the remote rear side (20, 20') of the respective front side (15, 15') of the stand (13, 13'), below the respective upper side (21, 21') of the stand (13, 13'),
-- which slide can be driven by means of a y-drive motor (19, 19') arranged below the respective upper side (21, 21'),
- with a respective tool spindle (24, 24') which is arranged on each y-slide (17, 17'), which
-- can be driven rotationally,
-- extends in the z-direction,
-- is non-displaceable relative to the y-slide (17, 17') in the z-direction and
-- has a tool holder (26, 26') at an end located in front of the front side (15, 15')
- with a working chamber (14) arranged in front of the front sides (15, 15'),
- with a workpiece carrier (27) arranged in the working chamber (14) on the machine bed (1),
- with at least one respective workpiece holder (30) associated with each stand (13, 13') and arranged on the workpiece carrier (27),
- with a bridge (33) provided directly above the upper side (21, 21') of each stand (13, 13'),
- with at least one tool magazine (34, 34') arranged directly above the upper sides (21, 21') of the stands (13, 13') on the bridge (33) and
- with a respective tool changer (39, 39') provided on the bridge (33) to transfer tools (37, 37') from the tool magazine (34, 34') to the tool holder (26, 26') and vice versa, the respective stand (13, 13') being movable below the tool magazine (34, 34') for the tool change in such a way that the respective tool holder (26, 26') is located below the respective tool changer (39, 39').

2. Machine tool according to claim 1, **characterized**
**in that** the tool changer (39, 39') has a change arm (41) which can be pivoted about a pivot axis (40) extending in the z-direction and which is provided at its two ends with a tool gripper (42) in each case and
**in that** the y-slide (17, 17') can be moved in the direction of the upper side (21, 21') of the stand (13, 13') to such an extent that a tool gripper (42) can be pivoted in front of a tool holder (26, 26').

3. Machine tool according to claim 1, **characterized**
**in that** a tool magazine (34, 34') is provided in each case, which is arranged directly above the upper side (21, 21') of each stand (13, 13').

4. Machine tool according to claim 1, **characterized**
**in that** the y-drive motor (25, 25') is coupled to the y-spindle spindle nut drive (22, 22') by means of a belt drive (23, 23').

5. Machine tool according to claim 4, **characterized**
**in that** the belt drive (23, 23') passes through an opening (23a) in the stand (13, 13').

6. Machine tool according to claim 5, **characterized**
**in that** the opening (23a) is configured in a rear side (20) of the stand (13).

7. Machine tool according to claim 1, **characterized**
**in that** the workpiece carrier (27) is configured in the form of a bridge, which is pivotable about an A-axis (28) parallel to the x-direction by means of a pivoting motor (29).

## Revendications

1. Machine-outil, comportant
- un socle de machine (1),
- une paire de rails de guidage (3) x s'étendant dans un sens x horizontal, disposés sur le socle de machine (1),
- deux chariots x (4, 4') disposés de manière mobile indépendamment l'un de l'autre sur les rails de guidage x (3) dans le sens x au moyen de moteurs d'entraînement x (6, 6'),
- un chariot z (9, 9') mobile dans un sens z horizontal s'étendant perpendiculairement au sens x horizontal, disposé sur chaque chariot x (4, 4'),
- un montant (13, 13') disposé sur chaque chariot z (9, 9') avec un côté supérieur (21, 21') et un côté avant (15, 15'),
- un chariot y (17, 17') disposé de manière mobile dans un sens y vertical s'étendant perpendiculairement au sens x et au sens z jusqu'à proximité du côté supérieur (21, 21'), disposé sur chaque côté avant (15, 15'),
-- qui est mobile respectivement au moyen d'une transmission d'écrou de broche y (22, 22'), la transmission d'écrou de broche y (22, 22') pouvant être entraînée en rotation au moyen d'un moteur d'entraînement y (19, 19') qui est disposé sur le côté arrière (20, 20') éloigné du côté avant (15, 15') du montant (13, 13') au-dessous de son côté supérieur (21, 21'),
- une broche d'outil (24, 24') disposée sur chaque chariot y (17, 17'), qui
-- peut être entraînée en rotation,
-- s'étend dans le sens z,
-- est immobile par rapport au chariot y (17, 17') dans le sens z et
-- présente un logement d'outil (26, 26') sur une extrémité se trouvant devant le côté avant (15, 15')
- un espace de travail (14) disposé devant les côtés avant (15, 15'),
- un porte-pièces (27) disposé dans l'espace de travail (14) sur le socle de machine (1),
- au moins un logement de pièces (30) associé à chaque montant (13, 13'), disposé sur le porte-pièces (27),
- un portique (33) prévu directement sur le côté supérieur (21, 21') de chaque montant (13, 13'),
- au moins un magasin à outils (34, 34') disposé directement au-dessus des côtés supérieurs (21, 21') des montants (13, 13') sur le portique (33) et
- un changeur d'outils (39, 39') prévu sur le portique (33) pour la transmission d'outils (37, 37') du magasin à outils (34, 34') au logement d'outil (26, 26') et inversement, le montant respectif (13, 13') pouvant être déplacé pour le changement d'outil sous le magasin à outils (34, 34') de telle manière que le logement d'outil (26, 26') respectif se trouve au-dessous du changeur d'outil respectif (39, 39').

2. Machine-outil selon la revendication 1, **caractérisée en ce que** le changeur d'outil (39, 39') présente un bras de changement (41) pouvant pivoter autour d'un axe de pivotement (40) s'étendant dans le sens z, qui est pourvu sur ses deux extrémités d'une pince pour outil (42) et
**en ce que** le chariot y (17, 17') peut être déplacé en direction du côté supérieur (21, 21') du montant (13, 13') jusqu'à ce qu'une pince pour outil (42) puisse être pivotée devant un logement d'outil (26, 26').

3. Machine-outil selon la revendication 1, **caractérisée en ce qu'**un magasin à outils (34, 34') est prévu, lequel est disposé directement au-dessus du côté supérieur (21, 21') de chaque montant (13, 13').

4. Machine-outil selon la revendication 1, **caractérisée en ce que** le moteur d'entraînement y (19, 19') est couplé à la transmission d'écrou de broche y (22, 22') au moyen d'un dispositif de transmission à courroie (23, 23').

5. Machine-outil selon la revendication 4, **caractérisée en ce que** le dispositif de transmission à courroie (23, 23') traverse une ouverture (23a) dans le montant (13, 13').

6. Machine-outil selon la revendication 5, **caractérisée en ce que** l'ouverture (23a) est réalisée dans un côté arrière (20) du montant (13).

7. Machine-outil selon la revendication 1, **caractérisée en ce que** le porte-pièces (27) est réalisé sous la forme d'un portique formé de manière à pouvoir pivoter autour d'un axe A (28) parallèle au sens x au moyen d'un moteur de pivotement (29).
